# EUROPEAN PATENT APPLICATION

(11) **EP 3 073 365 A1**
(43) Date of publication of application: **28.09.2016**
(21) Application number: 15160601.9
(22) Date of filing: 24.03.2015
(51) Int. Cl.: G06F 3/12, H04L 29/12

(54) **NETWORKED IMAGE FORMING APPARATUS, NETWORKED IMAGE FORMING SYSTEM AND METHOD OF IMAGE FORMING**

(71) Applicant: Ricoh Company, Ltd., Tokyo 143-8555 (JP)
(72) Inventor: Masuda, Yusaku, Tokyo, 143-8555 (JP)
(74) Representative: Leeming, John Gerard

(57) **Abstract**

A networked image forming system stores print jobs in a queue hosted by a user computer and includes a cache at an authentication server and/or an image forming device that stores address information, e.g. a hostname or IP address, of a user computer in association with a user ID. When a user wishes to print a document from the queue, information of print jobs in the queue is retrieved from the user computer so that the user can select print jobs to be printed. The cache allows a soft fail-over in the event of partial interruption of network communication.

## Description

The present invention relates to a networked image forming apparatus, a networked image forming system and a method of image forming using the networked image forming systems.

In large organisations it is common to provide multiple image forming apparatuses (e.g. multi-function peripherals) that are connected to a network for use by multiple users. Such an approach is often more economical than providing separate printers for each user, especially if advanced functions - such as double-sided printing, colour and finishing functions - are desired. When the first such systems were introduced, the user would designate which image forming apparatus would be used at the time of sending a document to print. However, this is not always convenient.

In an alternative approach, the user adds a document to be printed to a centralised print queue maintained by a print server, without specifying a specific image forming apparatus. Then, when the user wants to print the document, the user goes to a networked image forming device and identifies himself, e.g. using a username and PIN or password or a token such as a swipe card or RFID. The image forming apparatus contacts the print server and obtains a list of the documents in the print queue belonging to the user. The list is displayed to the user who selects the documents to be printed and the image forming apparatus prints the selected documents.

Although systems using centralised print queues have proven popular, they require the support of a complex infrastructure, particularly in a very large organisation. For example, it is generally necessary to control who is allowed to print documents and often desirable to track what has been printed and by whom. Thus, the print server and/or the image forming device will often need to communicate with one or more of: an authentication server, which authenticates the user and confirms his/her rights to print documents; a directory server, which stores user information hierarchically; and a usage server, which stores usage information.

For a large organisation with many sites, often in different countries, each site, or part of a site, will be connected by a single local area network (LAN) so that the organisation may maintain many separate LANs. Maintaining multiple servers - such as the print server, the authentication server, the directory server and the usage server - in each LAN becomes expensive and increases the maintenance burden. Therefore, an organisation might provide just a single instance of each of the authentication server, the directory server and the usage server in a central location and configure the print servers and image forming devices in each LAN to communicate with the central authentication server, central directory server and central usage server via a Wide Area Network (WAN). The amounts of data transmitted between the print server and/or the image forming apparatus on the one hand and the central authentication server, central directory server and central usage server on the other are not particularly large so it does not matter that the central authentication server, central directory server and central usage server are remote from the print server and/or the image forming apparatus. However, the amount of data that must be sent from the print server to the image forming apparatus is much larger. Therefore it makes sense to maintain the print server local to, i.e. within the same LAN as, the image forming apparatuses.

However, the present inventor has determined that a system as described above in which a remote central authentication server, central directory server and central usage server are used, suffers from multiple points of failure in that the user may be unable to print if the print server and/or image forming apparatus cannot communicate with any one of the central authentication server, central directory server and central usage server. This may occur due to a failure in the WAN, or any one of the LANs in which the central authentication server, central directory server and central usage server are located, even if the LAN of the print server and the image forming device is fully functional. Such a failure is particularly irritating to the user who may be unaware of and unsympathetic to the failure in a remote network.

It is an aim of the present invention to at least partially solve one or more of the above problems and provide resilience in the face of communication failures in a system of networked image forming apparatuses.

According to an embodiment of the present invention, there is provided a networked image forming system comprising:
a local area network;
a user computer connected to the local area network and having a printer driver module, the printer driver module being configured to generate print jobs and to maintain a print queue including print jobs;
an image forming device connected to the local area network and configured to print the print jobs;
an authentication server configured to communicate with the user computer and the image forming device so as to provide user information to enable printing of a print job to the image forming device; and
a cache configured to store temporarily the user information,
wherein the image forming device is configured to use the user information stored in the cache to obtain print job information.

According to an embodiment of the present invention, there is provided a method of printing a document in a networked system comprising a local area network, a user computer connected to the local area network, an image forming device connected to the local area network, and an authentication server, the method comprising:
the user computer receiving an instruction to print and generating a print job;
the image forming apparatus receiving an identification of a user;
the image forming apparatus consulting a cache to obtain an address of the user computer;
the image forming apparatus using the address to communicate with the user computer and obtain the print job; and
the image forming apparatus printing the print job.

According to an embodiment of the present invention, there is provided an image forming apparatus comprising:
a print engine;
a network interface;
an operation panel; and
a control module configured to receive a user ID from the operation panel, to obtain an address of a user computer associated with the user ID, to request via the network interface information of a print job from the user computer, and to control the print engine to print the print job.

According to an embodiment of the present invention, there is provided a printer driver comprising code means that when executed by a user computer instruct the computer to:
enter a print job into a print queue stored on the user computer;
register the print queue with an authentication server; and
in response to a request from an image forming apparatus, provide to the image forming apparatus information of the print job.

Exemplary embodiments of the invention are described below with reference to the accompanying drawings, in which:
Figure 1 is a schematic drawing of a networked system according to an embodiment of the invention;
Figure 2 is a schematic drawing of a user computer having a printer driver according to an embodiment of the invention;
Figure 3 is a schematic drawing of a cache database in an embodiment of the invention;
Figure 4 is a process diagram of a method of an embodiment of the invention; and
Figure 5 is a process diagram of another method of an embodiment of the invention.

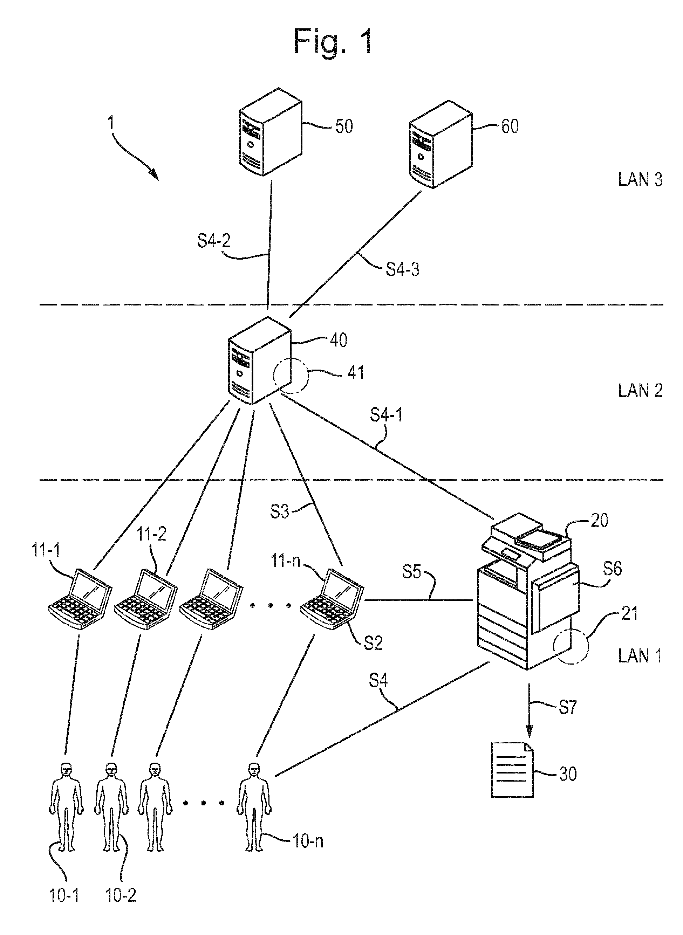

A networked image forming system **1** according to an embodiment of the invention is depicted schematically in Figure 1. A plurality of user computers **11-1** to **11-n** are connected to a first local area network **LAN1** and operated by a plurality of users **10-1** to **10-n.** The number of users **10** need not be equal to the number of user computers. The user computers **11** can include desktop and laptop computers, tablets, smartphones, virtual machines and other computing devices capable of generating a print job. The user computers may operate using any convenient operating system such as Windows®, iOS or Linux.

The first local area network **LAN1** may be based on wired or wireless technologies, or a combination of both and can operate using any suitable protocol such as Ethernet (IEEE 802.3) and/or Wi-Fi (IEEE 802.11).

A user computer **10** generates a print job **13** in response to a user command or as a result of an automated process. A print job is a file containing instructions to print something, for example all or part of a document, a screenshot or the output of a program. A document can be, for example, a text document, a picture, a spreadsheet, a report, or a multi-media document in any convenient format. A print job can also be in any convenient format, such as for example Postscript® or page description language (PDL) and may include data of the content to be printed in the original document format or rendered (e.g. rasterised) data.

An image forming device **20** is also connected to the first local area network **LAN1** and is able to print a print job **13.** Image forming device **20** may be, for example, a multi-function peripheral (MFP) capable of one or more additional functions, such as scanning, copying or faxing, as well as printing. Image forming device **20** has a print engine to create printed output **30** on media such as paper, transparencies, envelopes, etc.. The print engine may operate according to any convenient printing technique, such as xerography, inkjet printing, bubble jet printing, etc.. There may be multiple image forming devices **20** of various forms connected to the first local area network **LAN1.**

The first local area network **LAN1** is connected to a second local area network **LAN2** via a wide area network (WAN) such as the Internet. First local area network **LAN1** and second local area network **LAN2** may be connected via a virtual private network (VPN). Authentication server **40** is provided in the second local area network **LAN2** and provides authentication services for an organisation. Authentication may be required, for example, when a user logs onto a user computer, connects a user computer to the first local area network **LAN1,** or accesses a network resource, such as image forming device **20.**

In a large organisation having many sites and/or large sites, the users may be divided up amongst many different local area networks, due to physical restrictions on network size and/or limits on the number of users per network. Providing an authentication server per network therefore means that there must be many authentication servers, increasing the maintenance burden and making synchronisation of data between the authentication servers burdensome. It is generally desirable that users be able to log onto and use resources of any network in their organisation. Therefore it is desirable that the number of authentication servers **40** be kept to a minimum and so an authentication server **40** may provide authentication services to users and resources connected to multiple different local area networks, which may be physically remote from one-another.

Authentication server **40** may communicate with other servers, for example a directory server **50** and a database server **60.** Directory server, for example an LDAP server, may store a hierarchical directory of users, including information such as user IDs, real names, hashed passwords and access rights. Database server **60,** for example an SQL server, may store data recording users' usage of the network and its resources. The usage data may be used for accounting purposes and/or for tracking the consumption of consumables such as paper, ink or toner.

For the same reasons as with the authentication server, an organisation may desire to reduce the number of directory servers **50** and database servers **60** it maintains. Hence the directory server **50** and database server **60** may be located in one or more third local area networks **LAN3.** They can also be located in the same local area network as the authentication server **40.**

It should be noted that whilst the present invention is described in relation to a system which is connected to multiple local area networks, the invention can also be applied in a system in which all components are connected to the same network, be that a local area network, a wide area network, wired or wireless.

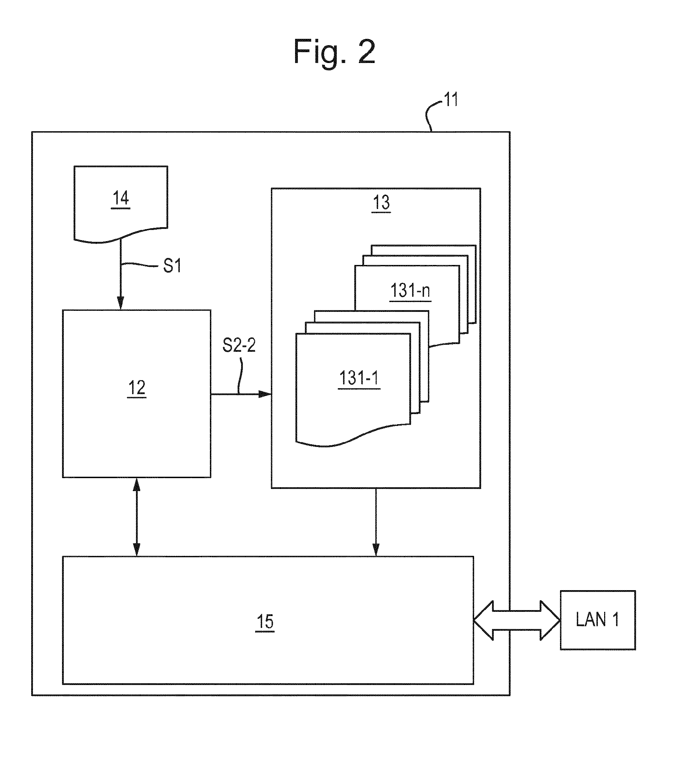

The process of printing in an embodiment of the invention will now be described in more detail with reference to Figures 2 to 5.

When a user **10** wishes to print a document, for example, he/she issues a print instruction in the relevant application or via the operating system of his/her user computer **11.** The user may be prompted to select options for printing - such as scaling, duplex printing or finishing - or default options may be applied. The user may be provided with the option to select a specific device to print the document, e.g. a printer connected directly to the user computer or a network printer. A print service according to an embodiment of the invention may be presented to the user as an option to be selected instead of a specific physical printer. The print service may be presented to the user and treated by the operating system as a virtual printer that is equivalent to a physical printer. In an embodiment, the print service is selected by default.

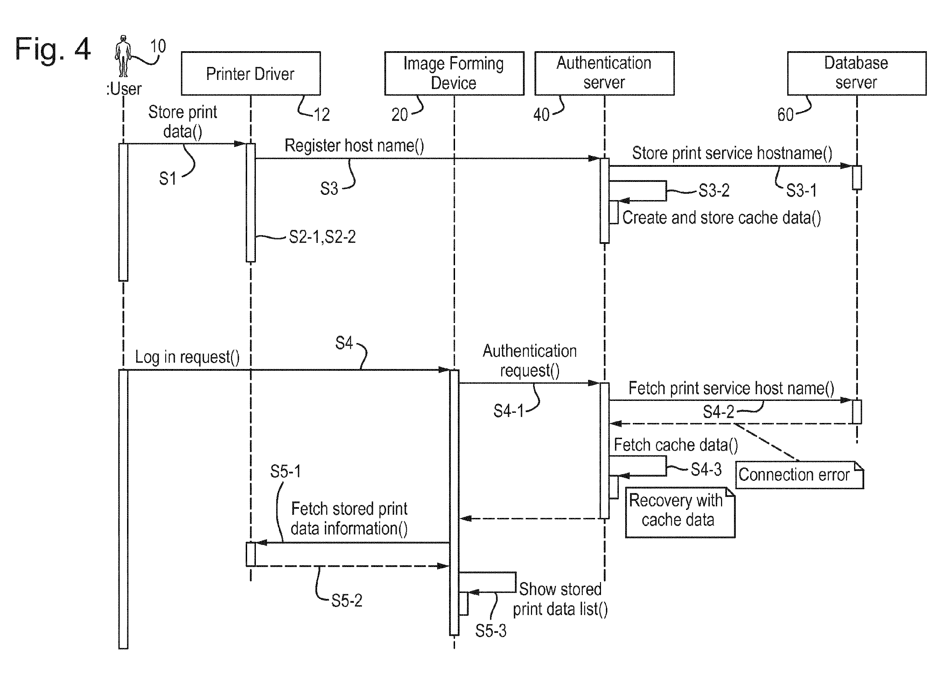

As shown in Figures 2 and 4, the content **14** to be printed to be printed is then delivered **S1** by the application or operating system to a printer driver **12** associated with the print service. The printer driver **12** converts **S2-1** the content to a print job **131,** for example defined in page description language (PDL). The print job is then entered **S2-2** into a print queue **13** which may contain multiple print jobs **131-1** to **131-n.** Print queue **13** is stored in the user computer **11,** e.g. in a non-volatile mass storage device such as a hard disk or a solid state drive.

Next, the printer driver **12** communicates with authentication server **40** and registers **S3** with it. Communication between the printer driver (and other elements of the system) and authentication server can be performed using any suitable protocol, such as HTTP or HTTPs. SLS or TLS encryption can be employed. In the registration procedure, printer driver **12** provides information identifying the user **10** who has instructed printing, e.g. by providing a user ID and a hashed password. The authentication server **40** determines whether the user ID and password are valid and optionally whether the user has necessary privileges to use the print service. User privileges may entitle a user to use all functions of the print service or only some. Authentication server **40** may look-up the user's record in directory server **50** in order to determine the user's privileges or other information. User privileges may be inferred from other information stored about the user, e.g. membership of groups, rather than stored explicitly. If the user does not have the necessary privileges an error message is sent to the printer driver **12.**

If the user does have the necessary privileges, the authentication server sends **S3-1** a message to database server **60** to create a user-host record indicating that the user has a print job **131** in the print queue **13** maintained by printer driver **12** on user computer **11.** The user-host record includes an address, e.g. a hostname and/or an IP address, of the user computer **11.** A user may use more than one computer and accordingly the database server **60** may store multiple user-host records linking a user with multiple user computers **11.**

At this stage, the authentication server **40** also creates **S3-2** a local cache record in first cache **41** containing at least information identifying the user **10** and the address information of the user computer **11** hosting the print queue **13.**

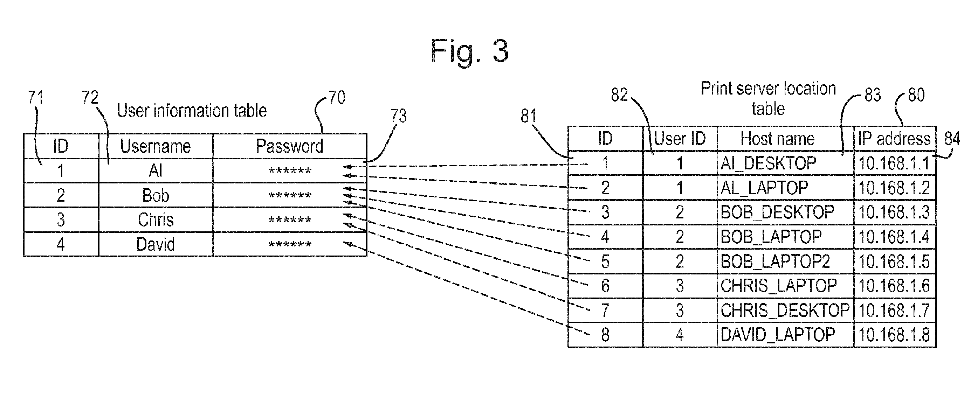

The content of first cache database **41** is shown in Figure 3. First cache database **41** comprises a user information table **70** including a plurality of user records, one for each user, and a printer server location table **80.** Each user record comprises a user ID **71,** which is an index field of the user information table **70,** a user name field **72** and a hashed password field **73.** The print server location table **80** has a plurality of records, one for each user computer **11** that has registered with the authentication server. Each record comprises an ID or index field **81,** a user ID field **82** identifying the user who has created a print job, a host name field **83** indicating the host name of the user computer **11** hosting the print queue **13,** and an IP address field **84** indicating the IP address of the user computer hosting the print queue **13.** Thus the first cache database **41** contains sufficient information to authenticate the user, to identify the relevant user computers **11** and to obtain information regarding the user's print jobs **13.**

Referring again to Figures 2 and 4, the user next proceeds to an image forming device **20** at which he or she wishes to obtain the print out and logs in **S4** to that image forming device **20.** Various different log-in methods can be provided. For example the user may log-in by entering a username and password or PIN on an input device, using a swipe card, smart card or RFID token, biometrics or any combination of such methods. The image forming apparatus **20** sends **S4-1** an authentication request to authentication server **40** including, for example, the user ID and a hashed password. Authentication server **40** requests **S4-2** all the user-host records for that user. These records identify the user computer(s) **11** hosting the print queue(s) **13** having print jobs **131** belonging to the user. In the normal course of events the database server **60** returns the relevant user-host records. If the user has registered print jobs in multiple print queues, the database server **60** returns all relevant user-host records. If the organisation maintains multiple authentication servers **40,** the user-host records need not have been originally registered by the authentication server **40** to which they are returned.

Authentication server **40** then sends **S4-3** the user-host record(s) to the image forming device **20.** Image forming device **20** fetches print job information from the user computer(s) whose address(es) were provided in the user host record(s). The request for the print job information may include the user ID and hashed password for authentication purposes. Image forming device **20** displays a list of the user's stored print job(s) and allows the user to select print jobs to be printed at that time. Other functions, such as to save a print job to a later time or to delete a print job can also be provided. The selected print job(s) **13** is(are) then fetched from the respective user computer(s) **11** and printed by the image forming apparatus as printed document **30.**

In an embodiment of the invention, the printer driver or other software on the user computer can be used to provide additional functionality whether or not the cached user information is used. For example, a printer driver may be capable of generating a preview image of part or all of a document to be printed. The printer driver can be further configured to communicate a preview image to the image forming apparatus for the user to check before printing. Also, the printer driver may apply rules based on the content of a document or meta-data. For example, a document containing prohibited content, e.g. predetermined words, can be prevented from printing. Similarly, a print job derived from a specific type of document, e.g. determined by the filename extension, can be prevented from printing.

When the print job has been sent to the image forming apparatus **20,** the printer driver **12** deletes it from the print queue **13.** Generally the printer driver does not wait to receive confirmation of successful printing before deleting the print job from the queue but that can be implemented as an alternative. If the user now has no print jobs in the print queue **13** maintained by printer driver **12,** the printer driver sends a message to authentication server **40** to delete the relevant user-host record. Alternatively, the user-host records can be set to expire automatically after a certain period if not refreshed. This can be convenient if the print jobs themselves are set to expire after a certain period if not printed.

If it is desired to record usage information, the image forming apparatus **20** sends a usage message to database server **60** which records the user's usage. The usage message can be sent directly to database server **60** or via authentication server **40.**

The above described basic method relies on communication links between the image forming apparatus **20** and authentication server **40** and between authentication server **40** and database server **60.** These links may involve a wide area network and may be less reliable than the links between user computer **11** and image forming apparatus **20** which are internal to a single local area network. According to an embodiment of the present invention, the cache database is provided to enable printing in the event that communication to either or both of the authentication server and the database server is non-functional or degraded.

First cache database **41** is provided in authentication server **40** and functions in the event that communication to the database server **60** fails. A first user-host cache record is created in step **S3-1,** when the user-host record is created in database server **60.** The first user-host cache record can be created before, after or simultaneously with the creation of the user-host record. At step **S4-2,** when the authentication server **40** attempts to retrieve the user-host record from the database server **60,** if an error is returned or no answer received within a predetermined time out period, the authentication server responds to the request from image forming apparatus **20** (step **S4-1**) using information from the first user-host cache record.

The image forming apparatus **20** then uses the user-host records returned by authentication server **40** which have been derived from the first cache database **41** to fetch print job information from the relevant user computers in the exact same process as when the user-host records had been returned from the database server **60.** Again, the user is presented with a list of print jobs returned by the user computer(s). The user can select print jobs to print in exactly the same way. According to an embodiment of the present invention it can be made completely transparent to the user that the print jobs have been obtained using the cached user-host record rather than a user-host record obtained from the database server **60.**

However, there is a possibility that the user-host records obtained from the first cache database **41** might be incomplete or out of date, for example because the user has registered a print job with a different authentication server elsewhere in the organisation. Therefore, in an embodiment of the present invention a warning message can be displayed to the user to alert him or her to the use of the cached records. In an embodiment of the present invention, the user can be given the option of manually entering the host name and/or IP address of a user computer **11** storing print jobs in the event that a user computer **11** is missing from the cached user-host records.

Thus, the first cache database **41** provides resilience to the system in that users are still able to print documents via the print service even if communication to the directory server **50** or the database server **60,** is interrupted.

An additional advantage of the above described embodiments is that a separate print server is not required since the print queues are maintained by the various user computers. Since print jobs can be very large files, a print server may require very large storage devices to accommodate print jobs from a large number of users. On the other hand, with the print queues distributed amongst the user computers **11** the storage requirement is spread and the users are more motivated to perform housekeeping, e.g. deleting no longer required print jobs. Furthermore, with a central print server supplying print jobs to multiple image forming apparatus a high communication bandwidth is required and a print server can become a bottleneck within the network. With the print jobs distributed amongst multiple user computers, the communication load is distributed and a bottleneck is avoided.

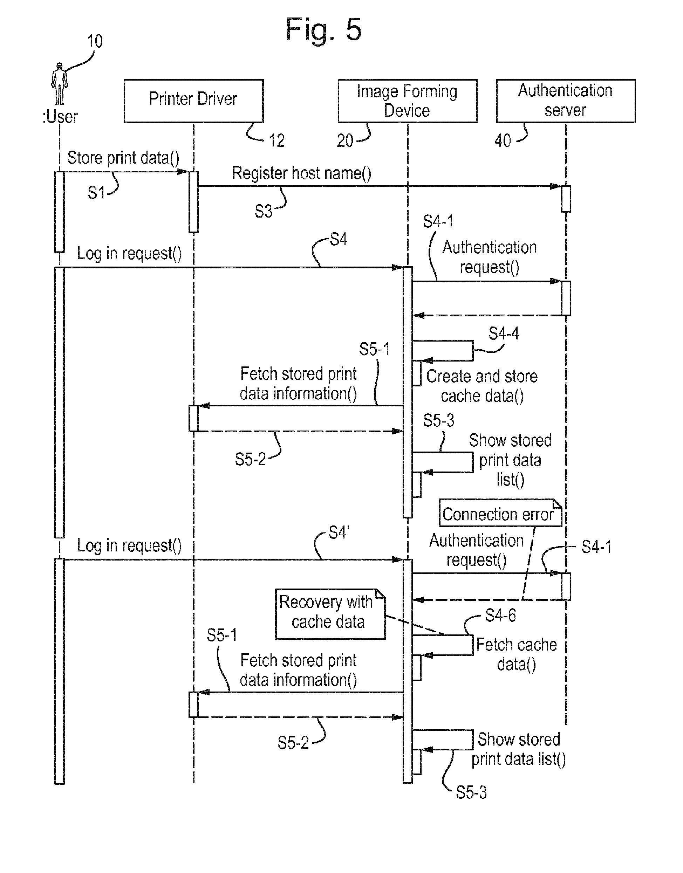

In an embodiment of the invention, a second cache database **21** is provided within image forming apparatus **20.** The use of the second cache database **21** will now be described with reference to Figures 1 and 5. The second cache database **21** has the same structure as first cache database **41** and includes the user information table **70** and print server location table **80.** Again, the second cache database **41** contains sufficient information to authenticate the user, identify the relevant user computers **11** and to obtain information regarding the user's print job **13**

Figure 5 illustrates steps of a method of printing carried out by the user **10,** printer driver **12,** imaging forming device **20** and authentication server **40,** omitting actions performed by the database server **60** for the sake of clarity.

In the same way as described above with reference to Figure 4, the user **10** instructs printing of a document which causes printer driver **12** to convert **S2-1** the document content to a print job and store **S2-2** it in a local print queue **13.** Printer driver **12** then registers **S3** its host name and address with authentication server **40.**

When the user proceeds to the image forming device **20** to print the document he or she logs in **S4.** The image forming device **20** sends **S4-1** an authentication request to authentication server **40** and receives an authentication reply. At this stage, the image forming device **20** creates and stores **S4-4** a user-host cache record in the second cache database **21.** The user-host cache record includes the information necessary to authenticate the user and also the necessary address details for communicating with the printer driver **12** hosted by the user computer **11.** Next, the image forming device **20** requests the stored print job information **S5-1** from printer driver **12** which sends **S5-2** the list of print jobs to image forming device **20.** Image forming device **20** displays **S5-3** the list of print jobs to the user who may select a print job for printing in the same manner as previously.

On a subsequent occasion, the user makes a subsequent log in request **S4** to image forming device **20.** Image forming device **20** again sends an authentication request **S4-1** to authentication server **40.** However, if there is a connection error, indicated by return of an error message or a time-out, image forming device **20** retrieves data from second cache database **21**. If the user is suitably authenticated, the host name and addresses of the user's computers stored in the second cache database **41** are used to again request **S5-1** information of the print jobs stored in the print queue **13** hosted by printer driver **12.** Printer driver **12** returns **S5-2** the list of the user's print jobs **131** and these are displayed **S5-3** to the user to allow selection of jobs to be printed as previously.

Thus, it will be seen that with the above arrangement the user is able to print their selected print jobs even if communication between the image forming device **20** and the authentication server **40** is interrupted. Again, use of the cached information can be entirely transparent to the user. Alternatively however since it is possible that the cache data is out of date a warning message may be displayed to the user.

In particular, it will be appreciated that the second cache database **21** does not assist if the user has not previously used the image forming device **20** since it will not contain a record relating to that user. Therefore, it is possible to provide the option for the user to manually enter the host name and/or address of the user computer to allow the list of print jobs stored there to be fetched.

In an embodiment of the invention multiple image forming apparatus **20** are provided within LAN 1. Each has its own second cache database **21.** To solve the problem that, when communication to the authentication server **40** is interrupted, a user might wish to print using one of the image forming apparatus that the user has not previously used, the second cache databases **21** of the multiple image forming apparatus **20** are synchronised. This can be done periodically, e.g. by the image forming apparatus transmitting copies of their own second cache database to other image forming apparatus on a predetermined schedule.

As with the first cache database **41,** entries in the second cache database **21** can be deleted manually when no longer required or expire automatically after a predetermined period. In an embodiment of the invention, a limit is set on the number of records that are held in the first cache database **41** and/or the second cache database **21.** The limit may be set on a per user basis or on an overall total basis. If a limit is set then when the limit is to be exceeded, the oldest or least recently accessed record is deleted to make room.

In an embodiment of the present invention, the print job information and/or the print jobs themselves may be encrypted. A decryption key may be stored by the database server and included in the first and second cache databases. Alternatively the user may be required to enter the decryption key at the image forming apparatus.

Having described specific embodiments of the present invention, it will be appreciated that variations and modifications of the above described embodiments can be made. The scope of the present invention is not to be limited by the above description but only by the terms of the appended claims.

## Claims

1. A networked image forming system comprising:
a local area network;
a user computer connected to the local area network and having a printer driver module, the printer driver module being configured to generate print jobs and to maintain a print queue including print jobs;
an image forming device connected to the local area network and configured to print the print jobs;
an authentication server configured to communicate with the user computer and the image forming device so as to provide user information to enable printing of a print job to the image forming device; and
a cache configured to store temporarily the user information,
wherein the image forming device is configured to use the user information stored in the cache to obtain print job information.

2. A system according to claim 1, wherein the cache is provided in the image forming apparatus and the image forming device is configured to obtain user information from the authentication server and store the user information in the cache.

3. A system according to claim 1 or 2, wherein the cache is provided in the authentication server and the authentication server is configured to receive an authentication request from the user computer and to store user information in the cache in response to the authentication request.

4. A system according to claim 1, 2 or 3, wherein the user information comprises a user ID identifying a user and an address of a user computer belonging to the user.

5. A system according to claim 4, wherein the address of a user computer is a hostname and/or an IP address.

6. A system according to any one of the preceding claims, wherein the user information comprises authentication information of a user.

7. A system according to any one of the preceding claims wherein the authentication server is external to the local area network.

8. A method of printing a document in a networked system comprising a local area network, a user computer connected to the local area network, an image forming device connected to the local area network, and an authentication server, the method comprising:
the user computer receiving an instruction to print and generating a print job;
the image forming apparatus receiving an identification of a user;
the image forming apparatus consulting a cache to obtain an address of the user computer;
the image forming apparatus using the address to communicate with the user computer and obtain the print job; and
the image forming apparatus printing the print job.

9. An image forming apparatus comprising:
a print engine;
a network interface;
an operation panel; and
a control module configured to receive a user ID from the operation panel, to obtain an address of a user computer associated with the user ID, to request via the network interface information of a print job from the user computer, and to control the print engine to print the print job.

10. An image forming apparatus according to claim 9 where the address of the user computer is obtained by making a request to a remote authentication service and the control module is further configured to create a local cache record associating the user ID with the address.

11. A printer driver comprising code means that when executed by a user computer instruct the computer to:
enter a print job into a print queue stored on the user computer;
register the print queue with an authentication server; and
in response to a request from an image forming apparatus, provide to the image forming apparatus information of the print job.
